# EUROPÄISCHE PATENTSCHRIFT

(11) **EP 0 973 050 B1**
(45) Veröffentlichungstag und Bekanntmachung des Hinweises auf die Patenterteilung: **11.09.2002**
(21) Anmeldenummer: 99440163.6
(22) Anmeldetag: 24.06.1999
(51) Int. Cl.: G02B 6/12, G02B 6/13

(54) **Verfahren zur Herstellung planarer Wellenleiterstrukturen**
Method for manufacturing planar waveguide structures
Procédé pour la fabrication de structures de guides d'ondes plans

(30) Priorität: 15.07.1998 DE 19831719
(43) Veröffentlichungstag der Anmeldung: 19.01.2000
(73) Patentinhaber: ALCATEL, 75008 Paris (FR)
(72) Erfinder: Weber, Dieter, 70806 Kornwestheim (DE)
(74) Vertreter: Rausch, Gabriele, Dr.

(56) Entgegenhaltungen:
- EP-A- 0 255 270
- EP-A- 0 607 884
- US-A- 5 064 266
- PATENT ABSTRACTS OF JAPAN vol. 1997, no. 07, 31. Juli 1997 (1997-07-31) & JP 09 080247 A (HITACHI CABLE LTD), 28. März 1997 (1997-03-28)
- PATENT ABSTRACTS OF JAPAN vol. 1998, no. 01, 30. Januar 1998 (1998-01-30) & JP 09 243846 A (HITACHI CABLE LTD), 19. September 1997 (1997-09-19)

## Beschreibung

Die Erfindung geht aus von einem Verfahren zur Herstellung von planaren Wellenleiterstrukturen nach der Gattung des Anspruchs 1.

Aus der Literatur, beispielsweise aus "Optische Telekommunikationssysteme", Herausgeber Hagen Pultsch, sind Herstellungsverfahren (siehe Seite 117ff) sowie mit diesen Herstellungsverfahren hergestellte Wellenleiterstrukturen (siehe Seite 221 ff) bekannt.

Um Licht in einem optischen Wellenleiter zu führen, muß dessen Brechzahl größer sein als die Brechzahl seiner Umgebung. Prinzipiell besteht der planare Wellenleiter aus einem dielektrischen Schaltungsträger, einem Substrat mit einer ersten Brechzahl n1, auf dem sich ein wellenleitendes Dielektrikum mit der Brechzahl n2 befindet. Als Deckschicht dient entweder Luft oder ein weiteres Dieletrikum der Brechzahl n3. Bei diesem Aufbau kann Licht in Folge wiederholter Totalreflektionen an den Grenzflächen des Wellenleiters geführt werden. Betrachtet man die Feldstärkeverteilung einer Lichtwelle in einem Streifenleiter so erkennt man, daß das Feld an der Feldgrenze zum benachbarten Medium nicht abrupt auf Null abklingt. Die Wellenleiter verhalten sich als offene Wellenleiter. Sind die Brechzahldifferenzen zwischen Wellenleiter der Struktur und Umgebung hinreichend groß, erstrecken sich die Feldausläufer nur wenig aus der wellenführenden Struktur hinaus. Um eine optimale Wellenleitung zu erhalten, ist es wünschenswert den Brechzahlunterschied groß zu halten und vor allem die Struktur an der Grenze im Herstellungsverfahren sauber zu gestalten.

Bei der Herstellung von Wellenleiterstrukturen in Glas- oder Siliziummaterial mit Hilfe bekannter Verfahren wie der Glasabscheidung aus der Gasphase treten unterschiedliche Probleme auf. Durch die Einwirkung der hohen Temperaturen sind die Wellenleiter oftmals verformt und leiden unter Spannungen. Beide Probleme führen zu einer schlechten Lichtführung im Wellenleiter. Das Aufbringen der oberen Deckschicht verursacht oftmals die Entstehung von Blasenstrukturen, die ebenfalls die Qualität des Wellenleiters beeinträchtigen. Weiterhin treten Ausdiffusionen von Dotiermaterialien aus dem optischen Kern in die umgebenden Schichten auf. Dadurch ist der Brechungsindexsprung an der Grenzschicht nicht scharf genug, um eine saubere Wellenleitung herbeizuführen.

Die Patentschrift JP 9080247 beschreibt ein Verfahren zur Herstellung eines (Quarzglas-) Wellenleiters, bei welchem ein hoher Brechzahlunterschied an den Grenzflächen des Wellenleiters dadurch erreicht wird, dass zwischen dem Wellenleiter und den den Wellenleiter umgebenen Schichen, der Substrat- und Deckschicht, eine fluoridhaltige Mantelschicht (engl.: cladding) eingebracht wird. Durch die den Kern umgebene fluoridhaltige Schicht wird auch eine Ausdiffusion von Dotierstoffen verhindert. Weiterhin wirkt die symmetrische Sphäre, bestehend aus dieser fluoridhaltigen Schicht stabilisierend auf die Form des Kerns und baut damit Spannung in der Wellenleiterstruktur ab.

Die Patentschrift US 5064299 beschreibt ein Verfahren zur Herstellung von Wellenleitern mit kreisförmigen Querschnitt. Dabei wird ein Wellenleiter mittels eines Flammhydrolyseverfahrens oder ähnlicher Verfahren auf einen Träger aufgebracht und durch Ätzung mit verdünnter Flußsäure (HF) strukturiert, d.h. auf etwa rechteckförmige Querschnitt gebracht. Durch Aufheizen über die Schmelztemperatur hinaus wird erreicht, dass daraus ein kreisförmiger Querschnitt entsteht. Anschließend wird dann eine Deckschicht aufgebracht.

Das erfindungsgemäße Verfahren mit den kennzeichnenden Merkmalen des unabhängigen Anspruchs hat den Vorteil, daß ein einfacher Weg beschrieben wird, den Wellenleiter mir einer fluoridhaltigen Schicht zu umgeben.

Durch die in den Unteransprüchen aufgeführten Maßnahmen ist eine vorteilhafte Weiterbildung und Verbesserung des im unabhängigen Anspruch angegebenen Verfahrens möglich.

Besonders vorteilhaft ist die Anwendung des Verfahrens für unterschiedliche Wellenleiterstrukturen aus Glas- oder Siliziumbasis, wobei die Schichten beispielsweise mit Flammenhydrolyse hergestellt werden. Die Strukturierung der Kernschicht kann vorteilhafterweise mit einem "reactive ion etching"-Verfahren erfolgen.

Weiterhin ist es von Vorteil, die fluoridhaltige Schicht über das Aufbringen einer fluoridhaltigen Flüssigkeit zu erzeugen. Das hat zudem den Vorteil, daß eine sehr dünne Fluoridschicht entsteht, die einen stark veränderten Brechungsindex gegenüber dem Material des Wellenleiters besitzt. Optimal ist eine Schichtdicke in der Größenordnung von 150 nm. Als zusätzlicher Effekt wird durch das Aufbringen einer flouridhaltigen Flüssigkeit das Strukturmaterial gereinigt.

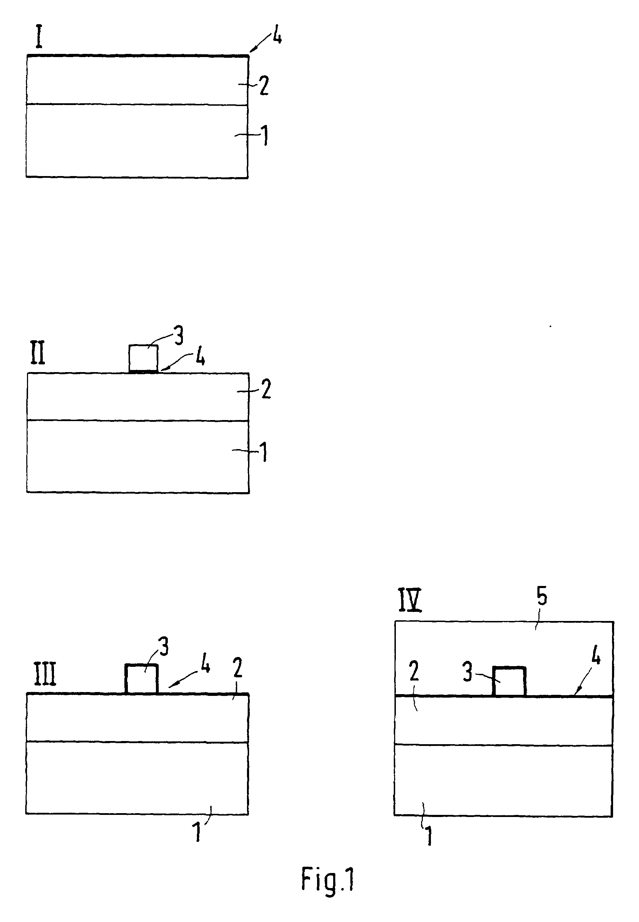

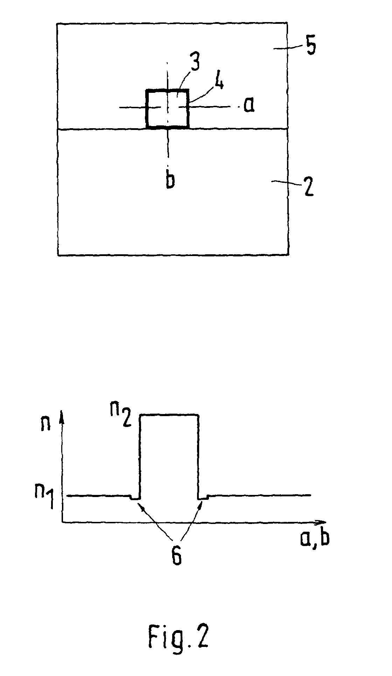

Ein Ausführungsbeispiel der Erfindung ist in der Zeichnung dargestellt und in der nachfolgenden Beschreibung näher erläutert. Es zeigt Figur 1 die Phasen 1 bis 4 der Herstellung eines Wellenleiters, und Figur 2 das Indexprofil eines solchen hergestellten Wellenleiters.

In einem ersten Herstellungsschritt wird auf eine Substratoberfläche 1 eine relativ zum Kern dicke untere Schicht 2 hergestellt. Diese untere Schicht besteht beispielsweise aus Siliziumoxid, das mit Boroxid oder Germaniumoxid dotiert ist. Die Abscheidung dieser Schicht auf dem Substrat erfolgt unter Verwendung der Flammenhydrolyse. Dazu werden die Grundsubstanzen für das Verfahren, hochreine, flüssige Chloride, verdampft. Die Chloride werden zusammen mit einem Trägergas sowie eventuell Trocknungsgasen in die Reaktionskammer eingefüllt. Die zur Abscheidung des Glases notwendige Energie wird entweder von außen durch einen Brenner oder Ofen oder durch ein Zusammenwirken mit einem Plasma und hoher Temperatur erzeugt. Werden dem Siliziumtetrachlorid Chloride anderer Elemente wie zum Beispiel Bor oder Germanium beigefügt, so erhält man Gläser, deren Brechzahl von der des reinen Quarzglases abweicht. Die Erweichungstemperatur der Schicht 2 liegt relativ gesehen zu den weiter aufzubringenden Schichten am höchsten. Die untere Schicht 2 wird auf dem Substrat, beispielsweise einem Silizium- oder auch einem Quarzglaswafer aufgesintert. Die Oberfläche der Schicht 2 wird mit einer flouridhaltigen Lösung, zum Beispiel BHF-Lösung (buffered HF-Lösung) oder verdünnter Flußsäure angeätzt. Durch das Anätzen entsteht in der Grenzphase eine stark fluoridhaltige dünne Schicht, auf die anschließend das Material der nächsten Schicht aufgebracht werden kann. Auf die fluoridhaltige Grenzschicht 4 wird eine Siliziumoxid-Kernschicht 3 aufgebracht. Diese Glasschicht ist beispielsweise mit Boroxid, Germaniumoxid und/oder Phosphoroxid dotiert, um die Brechzahl des Glasmaterials zu erhöhen. Je nach Anforderung der integriert optischen Struktur bleibt diese Schicht 3 komplett vorhanden oder wird strukturiert. Die Strukturierung des Wellenleiters kann dabei beispielsweise über das reaktive lonenätzen RIE (reactive ion etching) erfolgen. Dazu wird in der Reaktionskammer ein Plasma erzeugt, in dem reaktive und ionisierte Moleküle entstehen, die durch den an der Kathode, dem Substrat selbst, ausgebildeten Spannungsabfall auf die Probe hin beschleunigt werden. Durch ein solches Ätzverfahren erhält man beispielsweise in Figur 1.2 dargestellte Struktur des Wellenleiters 3. Als Ätzgase werden beispielsweise CHF3 und Sauerstoff eingesetzt. Die gesamte Oberflächenstruktur bestehend aus der unteren Schicht 2 sowie der wellenleitenden Struktur 3 wird analog zum Vorgang in Figur 1.1 mit BHF-Lösung oder verdünnter Flußsäure behandelt. Dadurch wird die Silikatschicht etwas abgetragen und die Grenzschicht fluoriert. Das fluoridhaltige Material hat die Eigenschaft, den Brechungsindex zu senken und was noch sehr viel interessanter ist, die Wanderung der Dotierstoffe im Glas die Germanium-, Phosphor- und Borionen zu unterdrücken. Liegt an einem optisch führenden Kern 3 eine sehr dünne Flouridschicht 4, mit stark verändertem Index relativ zum übrigen Kernmaterial, so übt diese Schicht keinen negativen Einfluß auf die Lichtleitung aus. Als Schichtdicke wird ein Wert in der Größenordnung von 150 nm bevorzugt. Gleichzeitig reicht diese Schichtdicke aus, um die Wanderung der Dotierstoffe aus dem Kernmaterial heraus oder hinein zu verhindern. Ein zusätzlicher Effekt für die Fluoridierung des geätzten Strukturmaterials ist die Reinigung der Oberflächen von störenden Verunreinigungen. Beim Anätzen entsteht in der Grenzphase eine stark fluoridhaltige dünne Schicht, auf die anschließend das Material des Kerns und/oder der oberen Deckschicht aufgebracht wird. Die fluoridhaltige Grenzschicht hat gleichzeitig eine formstabilisierende Eigenschaft, da diese Glasschicht einen Erweichungspunkt besitzt, der höher liegt als der der benachbarten Materialien. Der Kern wird demnach dem Druck der Nachbarmaterialien weniger ausgesetzt, die Spannungen werden verringert und der Brechungsindex des lichtleitenden Kerns bleibt aufgrund konstanter Konzentration und geringer Spannungen konstant. Nach dem Aufbringen der Fluoridschicht in Figur 1.3 wird die obere Deckschicht 5 aufgebracht. Diese Schicht entsteht wiederum über Flammenhydrolyse und anschließendes Sintern des Materials. Der Kern 3 liegt nach Abschluß der Herstellung gleichmäßig mit einer dünnen Flouridschicht 4 umgeben vor. Die Deckschicht 5 hat vorzugsweise einen der unteren Schicht 2 analogen Brechungsindex, wobei die Erweichungstemperatur des Materials kleiner sein muß, um durch den Sinterprozeß Substrat, untere Schicht und Kernmaterial nicht zu sehr zu verformen. Gerade zur Unterdrückung von Blasenfehlern durch Aufsintern der Deckschicht 5 ist das Aufbringen der dünnen fluoridhaltigen Schicht 4 von Vorteil.

Figur 2 zeigt exemplarisch den Verlauf des Brechungsindex n über die Schnittachsen a und b. Man erkennt einen starken Indexsprung im Bereich des Kernmaterials 3. An den mit 6 gekennzeichneten Stellen entsteht durch die dünne fluoridhaltige Schicht ein geringer Abfall in der Brechzahl, wobei dieser Effekt in der Grafik überhöht dargestellt ist. Es reicht schon aus einen scharfen Übergang zwischen den Brechzahlen n₁ und n₂ zu erhalten, um einen hochqualitativen Wellenleiter darzustellen. Durch die Aufbringung der flouridhaltigen Schicht wird der ideal dargestellte Brechzahlsprung zu einer schärferen Kante verbessert. Insgesamt erhöht sich dadurch die Qualität der Wellenleiterstruktur, die optische Dämpfung wird verringert.

## Patentansprüche

1. Verfahren zur Herstellung von planaren Wellenleiterstrukturen, wobei eine erste untere Schicht (2) auf einem Silizium- oder Glassubstrat (1) aufgebracht wird, anschließend eine Kernschicht (3) aufgebracht und strukturiert wird und diese strukturierte Kernschicht (3) durch eine Deckschicht (5) geschützt wird, **dadurch gekennzeichnet, daß** vor den Schritten zum Aufbringen der Kernschicht (3) und der Deckschicht (5) die jeweils vorher aufgebrachte Schicht fluoridiert wird.

2. Verfahren nach Anspruch 1, **dadurch gekennzeichnet, daß** die Schichten durch Flammhydrolyse unter Verwendung von Si-, B- und/oder Ge-Halogeniden hergestellt werden.

3. Verfahren nach Anspruch 1 oder 2, **dadurch gekennzeichnet, daß** die Strukturierung der Kernschicht (3) durch reaktives lonenätzen erfolgt.

4. Verfahren nach Anspruch 1, **dadurch gekennzeichnet, daß** die Fluoridierung durch Aufbringen einer fluoridhaltigen Flüssigkeit erfolgt.

5. Verfahren nach Anspruch 1, **dadurch gekennzeichnet, daß** durch die Fluoridierung eine fluoridhaltige Schicht von 150 nm Dicke entsteht.

## Claims

1. Process for manufacturing planar waveguide structures, wherein a first lower layer (2) is applied to a silicon substrate or glass substrate (1), a core layer (3) is then applied and structured and this structured core layer (3) is protected by an outer layer (5), **characterized in that**, prior to the steps of applying the core layer (3) and the outer layer (5), the layer applied previously in each case is fluoridized.

2. Process according to Claim 1, **characterized in that** the layers are manufactured by flame hydrolysis using Si halides, B halides and/or Ge halides.

3. Process according to Claim 1 or 2, **characterized in that** the core layer (3) is structured by reactive ion etching.

4. Process according to Claim 1, **characterized in that** the fluoridation is performed by applying a fluoride-containing liquid.

5. Process according to Claim 1, **characterized in that** the fluoridation produces a fluoride-containing layer 150 nm thick.

## Revendications

1. Procédé pour la fabrication de structures planaires de guides d'ondes, une première couche (2) inférieure étant appliquée sur un substrat de silicium ou de verre (1), une couche de noyau (3) étant appliquée ensuite et structurée et cette couche de noyau (3) structurée étant protégée par une couche de recouvrement (5), **caractérisée** en ce la couche appliquée avant est fluorée avant les étapes pour l'application de la couche de noyau (3) et de la couche de recouvrement (5).

2. Procédé selon la revendication 1, **caractérisé en ce que** les couches sont fabriquées par hydrolyse à la flamme en utilisant des halogénures de silicium, de bore et/ou de germanium.

3. Procédé selon la revendication 1 ou 2, **caractérisé en ce que** la structuration de la couche de noyau (3) s'effectue par gravure ionique réactive.

4. Procédé selon la revendication 1, **caractérisé en ce que** la fluoridation s'effectue par l'application d'un liquide à base de fluorure.

5. Procédé selon la revendication 1, **caractérisé en ce que** la fluoridation entraîne la formation d'une couche à base de fluorure d'une épaisseur de 15 nm.
